# EUROPÄISCHE PATENTANMELDUNG

(11) **EP 4 553 533 A1**
(43) Veröffentlichungstag der Anmeldung: **14.05.2025**
(21) Anmeldenummer: 24209584.2
(22) Anmeldetag: 29.10.2024
(51) Int. Cl.: G01S 7/02, G01S 7/481, G01S 13/931, G01S 17/931

(54) **AUSSENVERKLEIDUNGSTEILANORDNUNG FÜR EIN KRAFTFAHRZEUG**

(30) Priorität: 10.11.2023 DE 102023131264
(71) Anmelder: REHAU Automotive SE & Co. KG, 95111 Rehau (DE)
(72) Erfinder: Hähnel, Gerd, 95111 Rehau (DE); Turbanisch, Fabian, 95448 Bayreuth (DE); Yildirim, Mustafa, 95028 Hof (DE)
(74) Vertreter: Laukant, Holger

(57) **Zusammenfassung**

Die Erfindung betrifft eine Außenverkleidungsteilanordnung für ein Kraftfahrzeug, mi einem Bauteil (1) eines Kraftfahrzeuges, das einen Teil der Karosserie des Kraftfahrzeugs bildet oder welches dafür vorgesehen ist mit der Karosserie des Kraftfahrzeuges verbunden zu sein, und mit einem an dem Bauteil (1) angeordneten Umfeld-Detektionselement (2), und mit einer Dekorblende (3), die vor dem Bauteil (1) positioniert ist, wobei die Dekorblende (3) aus einer die Sichtseite (A) der Dekorblende (3) bildenden Frontblende (4), die partiell oder vollständig von aussendbarer Strahlung des Umfeld-Detektionselement (2) oder von empfangbarer Strahlung für das Umfeld-Detektionselement (2) durchstrahlbar ist, und einem die Frontblende (4) rückseitig abschließenden Abdeckelement (5) besteht, wobei die Frontblende (4) und das Abdeckelement (5) zusammen einen Raum (6) einschließen, wobei ein Teil des Umfeld-Detektionselements (2) in dem Raum (6) aufgenommen ist, wobei das Umfeld-Detektionselement (2) durch eine Öffnung (7) in dem Abdeckelement (5) in den Raum (6) hineinragt und, wobei zwischen dem Öffnungsrand (8) und dem Umfeld-Detektionselement (2) wenigstens ein flexibles Dichtungselement (9) vorgesehen ist, wobei die Öffnung (7), das Umfeld-Detektionselement (2) und das Dichtungselement (9) so ausgebildet sind, dass die Dekorblende (3) in Relation zu dem Umfeld-Detektionselement (2) in der Öffnung (7) in unterschiedlichen Raumrichtungen, bevorzugt in allen Raumrichtungen, verlagerbar ist und der Raum (6) gleichzeitig vor dem Eindringen von Feststoffen oder Fluiden geschützt ist.

## Beschreibung

Die vorliegende Erfindung betrifft eine Außenverkleidungsteilanordnung für ein Kraftfahrzeug und ein Verfahren zur Montage einer derartigen Außenverkleidungsteilanordnung.

Eine Außenverkleidungsteilanordnung für ein Kraftfahrzeug, mit einem Bauteil eines Kraftfahrzeuges, das einen Teil der Karosserie des Kraftfahrzeug bildet oder welches dafür vorgesehen ist mit der Karosserie des Kraftfahrzeuges verbunden zu sein, und mit einem an dem Bauteil angeordneten Umfeld-Detektionselement, und mit einer Dekorblende, die vor dem Bauteil positioniert ist, wobei die Dekorblende aus einer die Sichtseite der Dekorblende bildenden Frontblende, die partiell oder vollständig von aussendbarer Strahlung des Umfeld-Detektionselement oder von empfangbarer Strahlung für das Umfeld-Detektionselement durchstrahlbar ist, und einem die Frontblende rückseitig abschließenden Abdeckelement besteht, wobei die Frontblende und das Abdeckelement zusammen einen Raum einschließen, ist aus dem Stand der Technik bekannt. Als Beispiel sei das Dokument EP 3 473 497 B1 genannt.

Bei aus dem Stand der Technik bekannten Außenverkleidungsteilanordnungen für Kraftfahrzeuge besteht ein Nachteil dahingehend, dass das Umfeld-Detektionselement vollständig in dem Raum zwischen Frontblende und Abdeckelement angeordnet ist. Bei einer Beschädigung der Dekorblende muss dann zwangsläufig die gesamte Einheit inklusive des Umfeld-Detektionselements getauscht werden. Dies führt zu deutlich höheren Reparatur- und Ersatzteilkosten.

Die Erfindung stellt sich daher die Aufgabe eine Außenverkleidungsteilanordnung mit den eingangs beschriebenen Merkmalen anzugeben, die gegenüber dem Stand der Technik eine vereinfachte Montage und Demontage im Reparaturfall aufweist und gleichzeitig eine hohe Funktionssicherheit gewährleistet.

Erfindungsgemäß wird diese Aufgabe gelöst durch eine Außenverkleidungsteilanordnung für ein Kraftfahrzeug, mit
- einem Bauteil eines Kraftfahrzeuges, das einen Teil der Karosserie des Kraftfahrzeugs bildet oder welches dafür vorgesehen ist mit der Karosserie des Kraftfahrzeuges verbunden zu sein, und mit
- einem an dem Bauteil angeordneten Umfeld-Detektionselement, und mit
- einer Dekorblende, die vor dem Bauteil positioniert ist,
wobei die Dekorblende aus einer die Sichtseite der Dekorblende bildenden Frontblende, die partiell oder vollständig von aussendbarer Strahlung des Umfeld-Detektionselement oder von empfangbarer Strahlung für das Umfeld-Detektionselement durchstrahlbar ist, und einem die Frontblende rückseitig abschließenden Abdeckelement besteht, wobei die Frontblende und das Abdeckelement zusammen einen Raum einschließen, wobei ein Teil des Umfeld-Detektionselements in dem Raum aufgenommen ist, wobei das Umfeld-Detektionselement durch eine Öffnung in dem Abdeckelement in den Raum hineinragt und, wobei zwischen dem Öffnungsrand und dem Umfeld-Detektionselement wenigstens ein flexibles Dichtungselement vorgesehen ist, wobei die Öffnung, das Umfeld-Detektionselement und das Dichtungselement so ausgebildet sind, dass die Dekorblende in Relation zu dem Umfeld-Detektionselement in der Öffnung in unterschiedlichen Raumrichtungen, bevorzugt in allen Raumrichtungen, verlagerbar ist und der Raum gleichzeitig vor dem Eindringen von Feststoffen oder Fluiden geschützt ist.

Die erfindungsgemäße Außenverkleidungsteilanordnung bietet den Vorteil, dass das Umfeld-Detektionselement nicht ausschließlich in dem Raum angeordnet ist, sondern mit der Karosserie des Kraftfahrzeugs (direkt an einem Bauteil das Teil der Karosserie ist, oder indirekt über ein Bauteil, das dafür vorgesehen ist mit der Karosserie verbunden zu sein) verbunden ist und nur ein Teil des Umfeld-Detektionselements in den Raum hineinragt. Im Fall einer Beschädigung der Dekorblende muss diese dann nur von dem Umfeld-Detektionselement heruntergezogen werden und kann gegen eine neue Dekorblende getauscht werden. Diese lässt sich durch den erfindungsgemäßen Aufbau der Außenverkleidungsteilanordnung entsprechend einfach auf das noch an dem Kraftfahrzeug verbliebene Umfeld-Detektionselement aufschieben oder aufstecken. Während des üblichen Betriebs des Kraftfahrzeugs ermöglicht es der erfindungsgemäße Aufbau der Außenverkleidungsteilanordnung eine hohe Funktionssicherheit des Umfeld-Detektionselements zu gewährleisten, da Vibrationen oder Stöße (beispielsweise bei einem Überfahren eines holprigen Straßenbelags) der Dekorblende nicht auf das Umfeld-Detektionselement übertragen werden. Gleichzeitig bleibt durch entsprechend ausgebildeter und aufeinander abgestimmter Öffnung, Umfeld-Detektionselement und flexiblem Dichtungselement der Raum vor dem Eindringen von Feststoffen oder Fluiden geschützt.

Das Bauteil kann beispielsweise ein Biegeträger oder ein Frontendträger oder ein Seitenwandträger oder ein Heckträger sein.

Die Öffnung kann so in dem Abdeckelement positioniert sein, dass im Verbauzustand der Außenverkleidungsteilanordnung an einem Kraftfahrzeug eine Verschiebung des Umfeld-Detektionselements in Relation zu der Dekorblende entlang einer Längsachse des Kraftfahrzeuges möglich ist. Die erfindungsgemäße Außenverkleidungsteilanordnung erlaubt es, dass bei einem Einwirken einer äußeren Kraft (zum Beispiel bei einem Heckunfall oder Frontunfall) auf die Sichtseite der Dekorblende, die Dekorblende auf dem Umfeld-Detektionselement verlagerbar ist, ohne das Umfeld-Detektionselement zu beschädigen. Erfindungsgemäß ist das Dichtungselement zusätzlich in der Lage Toleranzen der oder Belastungen auf die Dekorblende in weiteren Raumrichtungen, bevorzugt in allen Raumrichtungen, des Kraftfahrzeugs auszugleichen. Beispielsweise in Höhenrichtung des Kraftfahrzeugs oder in Richtung quer zur Längsachse des Kraftfahrzeugs.

Das Dichtungselement kann insbesondere als Faltenbalgdichtung oder als Hohlkammerprofil ausgebildet sein. Insbesondere eine Faltenbalgdichtung eignet sich aufgrund ihrer hohen Flexibilität als ein erfindungsgemäßes Dichtungselement.

Das Dichtungselement kann so ausgebildet sein, dass es zusätzlich eine Einführschräge oder Einführabrundung für das Umfeld-Detektionselement bildet oder aufweist. Hierdurch wird die Montage der Außenverkleidungsteilanordnung erleichtert, da das Umfeld-Detektionselement einfacher in die Öffnung des Abdeckelements oder in das Dichtungselement eingeführt werden kann. Hierbei kann alternativ auf beiden Seiten (Außenseite und Innenseite) der Öffnung eine entsprechende Einführschräge oder Einführabrundung an dem Dichtungselement vorgesehen sein, um zusätzlich auch eine Demontage des Umfeld-Detektionselements bzw. der Außenverkleidungsteilanordnung zu erleichtern.

Das Dichtungselement kann beispielsweise aus einem Elastomeren Werkstoff bestehen.

An dem Umfeld-Detektionselement können Halteabschnitte zur Befestigung des Dichtungselements vorgesehen sein. Die Halteabschnitt verbessern die zuverlässige Positionierung und Befestigung des Dichtungselements an dem Umfeld-Detektionselement. Die Halteabschnitte können beispielsweise durch umlaufende Kerben in dem Umfeld-Detektionselement oder durch umlaufende Vorsprünge auf dem Umfeld-Detektionselement gebildet sein.

Die Frontblende ist bevorzugt schalenförmig ausgebildet. Hierdurch ergibt sich ein ausreichend großer Raum zur teilweisen Aufnahme des Umfeld-Detektionselements.

Die Frontblende und das Abdeckelement können stoffschlüssig miteinander verbunden sein. Eine stoffschlüssige Verbindung kann hierbei insbesondere eine Klebeverbindung oder eine Schweißverbindung sein.

Um eine nachträgliche Wartung oder einen Wechsel nur der Frontblende zu erleichtern kann alternativ die Frontblende und das Abdeckelement lösbar miteinander verbunden sein. Für diesen Fall ist als eine bevorzugte Ausführungsform zwischen den Randbereichen der Frontblende und des Abdeckelements eine Dichtung oder ein Dichtmittel vorgesehen.

Das Abdeckelement kann aus einem Polymermaterial bestehen, insbesondere aus einem faserverstärkten oder partikelverstärkten Polymermaterial.

Das Umfeld-Detektionselement kann insbesondere ein Lidarsystem und/oder ein Radarsystem und/oder ein Kamerasystem umfassen. Unter dem Begriff "System" ist insbesondere eine Sende- und/oder Empfangseinheit zu verstehen.

Die Frontblende ist bevorzugt aus einem für sichtbares oder infrarotes Licht transparentem oder transluzenten Polymermaterial ausgebildet. Das transparente oder transluzente Polymermaterial kann insbesondere Polycarbonat, Polymethylmethacrylat, Polystyrol (beispielsweise PS, ABS, ASA), thermoplastisches Polyester (beispielsweise PET, PBT), Polypropylen (PP) oder ein Bioplymer (beispielsweise Zelluloseacetat, Polyhydroxybutyrat, Polymilchsäure, Polyhydroxyalkaonat) umfassen.

Die Dekorblende kann zusätzlich eine synthetische Membran aufweisen, die einen Fluidaustausch zwischen dem Raum und der die Dekorblende umgebenden Atmosphäre ermöglicht. Synthetische Membranen, wie sie beispielsweise in wasserdichter Kleidung oder atmungsaktiven Stoffen verwendet werden, lassen den Transport von Wasserdampf und Luft zu, während sie flüssiges Wasser blockieren. Durch die Membran kann zum einen ein Druckausgleich zwischen dem Raum und der Atmosphäre erreicht werden, für den Fall, dass es zu einer Verschiebung oder Relativbewegung von Umfeld-Detektionselement und Dekorblende kommt. Zum anderen kann über die Membran Feuchtigkeit abgeführt werden, für den Fall, dass diese wider Erwarten in den Raum gelangt ist.

Weiterhin Teil der Erfindung ist ein Kraftfahrzeug mit einer Außenverkleidungsteilanordnung wie vorstehend beschrieben.

Ebenfalls Teil der Erfindung ist ein Verfahren zur Montage einer vorstehend beschriebenen Außenverkleidungsteilanordnung an einem Kraftfahrzeug, wobei in einem ersten Verfahrensschritt das Umfeld-Detektionselement an dem Bauteil angeordnet wird und in einem nachfolgenden Verfahrensschritt die Dekorblende und das Dichtungselement über das Umfeld-Detektionselement geschoben wird, indem das Umfeld-Detektionselement in die Öffnung des Abdeckelements eingeführt und ein Teil des Umfeld-Detektionselements in dem Raum aufgenommen wird.

### Ausführungsbeispiele

Im Folgenden wird die Erfindung anhand lediglich Ausführungsbeispiele darstellender Zeichnung erläutert. Es zeigen schematisch:
- Fig. 1: eine Frontalansicht einer Frontblende und einem Abdeckelement;
- Fig. 2: eine rückwärtige Ansicht der Dekorblende bestehend aus dem Abdeckelement und der davorliegenden Frontblende;
- Fig. 3: eine Querschnittsdarstellung durch die Dekorblende aus Fig. 2;
- Fig. 4: eine schematische Querschnittsdarstellung durch eine erfindungsgemäße Außenverkleidungsteilanordnung.

In den Figuren werden gleiche oder funktionsgleiche Elemente mit den gleichen Bezugszeichen versehen.

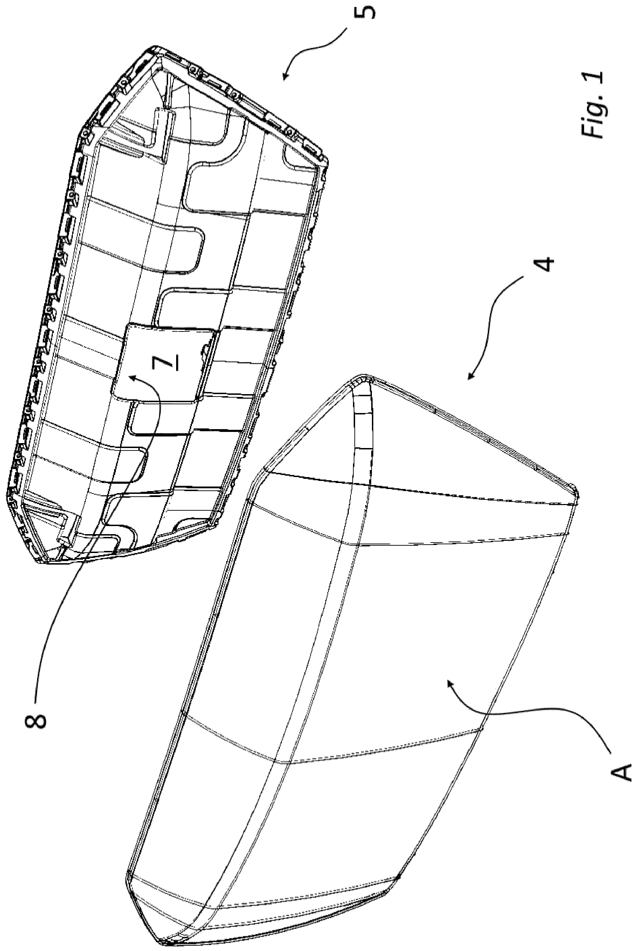

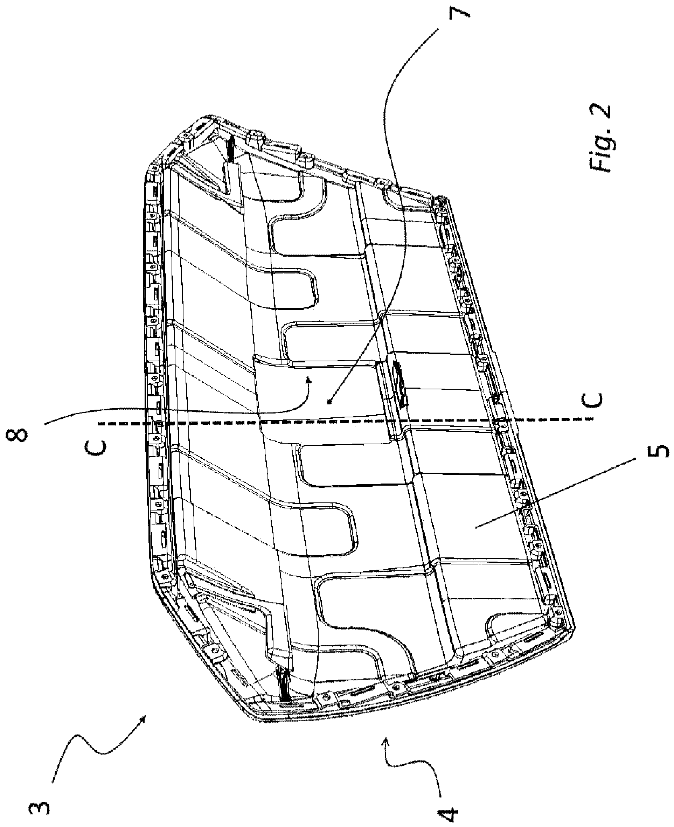

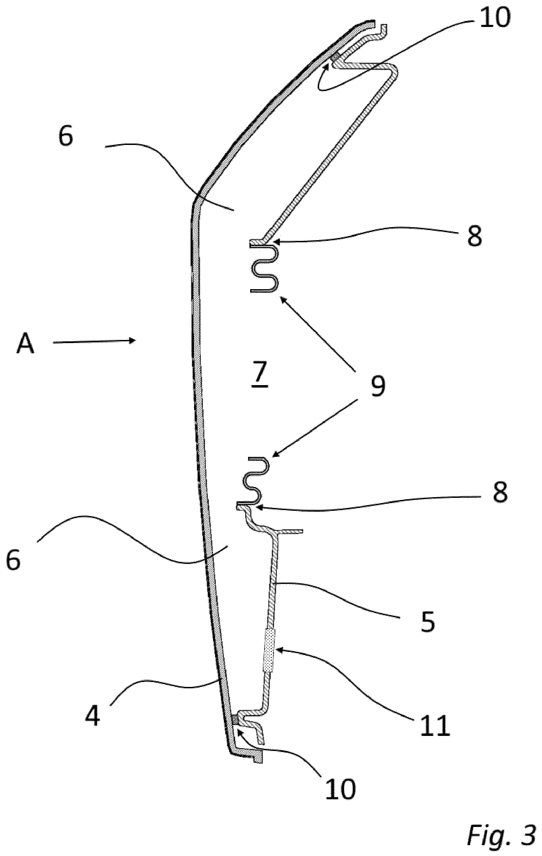

In der Fig. 1 und in der Fig. 2 ist ein Teil einer Außenverkleidungsteilanordnung für ein Kraftfahrzeug dargestellt. Nämlich einer Dekorblende 3, wobei die Dekorblende 3 aus einer die Sichtseite A der Dekorblende 3 bildenden Frontblende 4, die partiell oder vollständig von aussendbarer Strahlung des Umfeld-Detektionselement 2 oder von empfangbarer Strahlung für das Umfeld-Detektionselement 2 durchstrahlbar ist, und einem die Frontblende 4 rückseitig abschließenden Abdeckelement 5 besteht. In Fig. 3 ist zusätzlich noch ein an dem Öffnungsrand 8 der Öffnung 7 angeordnetes flexibles Dichtungselement 9 erkennbar.

In der Querschnittsdarstellung gemäß der Schnittlinie C-C in Fig. 2 ist in der Fig. 3 erkennbar, dass die Frontblende 4 und das Abdeckelement 5 zusammen einen Raum 6 einschließen. Zudem weist die Dekorblende 3 eine synthetische Membran 11 auf, die einen Fluidaustausch zwischen dem Raum 6 und der die Dekorblende 3 umgebenden Atmosphäre ermöglicht. Diese Membran 11 ist vorliegend in das Abdeckelement 5 integriert - könnte jedoch genauso auch in die Frontblende 4 integriert sein.

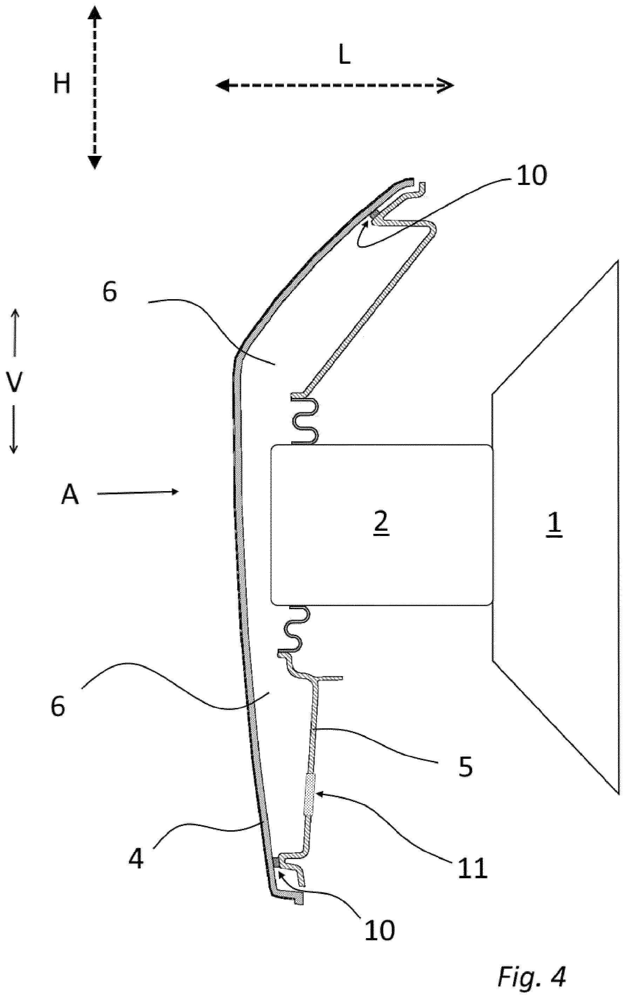

In der Fig. 4 ist die erfindungsgemäße Außenverkleidungsteilanordnung für ein Kraftfahrzeug als schematische Querschnittsdarstellung gezeigt, mit
- einem Bauteil 1 eines Kraftfahrzeuges, das einen Teil der Karosserie des Kraftfahrzeugs bildet oder welches dafür vorgesehen ist mit der Karosserie des Kraftfahrzeuges verbunden zu sein, und mit
- einem an dem Bauteil 1 angeordneten Umfeld-Detektionselement 2, und mit
- einer Dekorblende 3, die vor dem Bauteil 1 positioniert ist,
wobei die Dekorblende 3 aus einer die Sichtseite A der Dekorblende 3 bildenden Frontblende 4, die partiell oder vollständig von aussendbarer Strahlung des Umfeld-Detektionselement 2 oder von empfangbarer Strahlung für das Umfeld-Detektionselement 2 durchstrahlbar ist, und einem die Frontblende 4 rückseitig abschließenden Abdeckelement 5 besteht, wobei die Frontblende 4 und das Abdeckelement 5 zusammen einen Raum 6 einschließen. Ein Teil des Umfeld-Detektionselements 2 ist in dem Raum 6 aufgenommen, wobei das Umfeld-Detektionselement 2 durch eine Öffnung 7 in dem Abdeckelement 5 in den Raum 6 hineinragt.

Zwischen dem Öffnungsrand 8 und dem Umfeld-Detektionselement 2 ist wenigstens ein flexibel ausgebildetes Dichtungselement 9 vorgesehen, wobei die Öffnung 7, das Umfeld-Detektionselement 2 und das Dichtungselement 9 so ausgebildet sind, dass die Dekorblende 3 in Relation zu dem Umfeld-Detektionselement 2 in der Öffnung 7 bzw. in dem Dichtungselement 9 in unterschiedlichen Raumrichtungen, bevorzugt in allen Raumrichtungen, verlagerbar ist und der Raum 6 gleichzeitig vor dem Eindringen von Feststoffen oder Fluiden geschützt ist.

In der Fig. 4 ist dargestellt, dass die Öffnung 7 so in dem Abdeckelement 5 positioniert ist, dass im Verbauzustand der Außenverkleidungsteilanordnung an einem Kraftfahrzeug die gleitende Verschiebung des Umfeld-Detektionselements 2 entlang einer Längsachse L des Kraftfahrzeuges möglich ist. Die Außenverkleidungsteilanordnung erlaubt es, dass bei einem Einwirken einer äußeren Kraft (zum Beispiel bei einem Heckunfall oder Frontunfall) auf die Sichtseite A der Dekorblende 3, die Dekorblende 3 auf dem Umfeld-Detektionselement 2 verlagerbar ist, ohne das Umfeld-Detektionselement 2 zu beschädigen. Erfindungsgemäß ist das Dichtungselement 9 zusätzlich in der Lage Montagetoleranzen, Vibrationen V oder Belastungen auf die Dekorblende 3 in weiteren Raumrichtungen des Kraftfahrzeugs auszugleichen. Beispielsweise zusätzlich in Höhenrichtung H des Kraftfahrzeugs oder in Richtung quer zur Längsachse L des Kraftfahrzeugs, wenn die Außenverkleidungsteilanordnung an einem Kraftfahrzeug montiert ist.

Das Dichtungselement 9 kann insbesondere als Faltenbalgdichtung oder als Hohlkammerprofil ausgebildet sein. Insbesondere eine Faltenbalgdichtung eignet sich aufgrund ihrer hohen Flexibilität als ein erfindungsgemäßes Dichtungselement 9.

Die Dekorblende 3 weist eine synthetische Membran 11 aufweist, die einen Fluidaustausch zwischen dem Raum 6 und der die Dekorblende 3 umgebenden Atmosphäre ermöglicht.

In der Fig. 1 ist erkennbar, dass die Frontblende 4 des Ausführungsbeispiels schalenförmig ausgebildet ist.

Die Frontblende 4 und das Abdeckelement 5 können stoffschlüssig miteinander verbunden sein.

In der Fig. 3 und Fig. 4 ist als Variante dargestellt, dass die Frontblende 4 und das Abdeckelement 5 lösbar miteinander verbunden sind (beispielsweise über Rast- oder Schnappverbindungen). Hierbei ist zwischen den Randbereichen der Frontblende 4 und des Abdeckelements 5 eine Dichtung 10 oder ein Dichtmittel vorgesehen, um einen Zutritt von Fluiden oder Feststoffen über diese Randbereiche zu verhindern.

Das Abdeckelement 5 kann aus einem Polymermaterial bestehen, insbesondere aus einem faserverstärkten oder partikelverstärkten Polymermaterial.

Das gezeigte Umfeld-Detektionselement 2 kann beispielsweise ein Lidarsystem oder ein Radarsystem oder ein Kamerasystem umfassen.

Bei einem Verfahren zur Montage einer vorstehend beschriebenen Außenverkleidungsteilanordnung an einem Kraftfahrzeug kann in einem ersten Verfahrensschritt das Umfeld-Detektionselement 2 an dem Bauteil 1 angeordnet werden und in einem nachfolgenden Verfahrensschritt die Dekorblende 3 und das Dichtungselement 9 über das Umfeld-Detektionselement 2 geschoben werden, indem das Umfeld-Detektionselement 2 in die Öffnung 7 des Abdeckelements 5 und gleichzeitig in das Dichtungselement 9 eingeführt und ein Teil des Umfeld-Detektionselements 2 in dem Raum 6 aufgenommen wird.

## Patentansprüche

1. Außenverkleidungsteilanordnung für ein Kraftfahrzeug, mit
- einem Bauteil (1) eines Kraftfahrzeuges, das einen Teil der Karosserie des Kraftfahrzeugs bildet oder welches dafür vorgesehen ist mit der Karosserie des Kraftfahrzeuges verbunden zu sein, und mit
- einem an dem Bauteil (1) angeordneten Umfeld-Detektionselement (2), und mit
- einer Dekorblende (3), die vor dem Bauteil (1) positioniert ist,
wobei die Dekorblende (3) aus einer die Sichtseite (A) der Dekorblende (3) bildenden Frontblende (4), die partiell oder vollständig von aussendbarer Strahlung des Umfeld-Detektionselement (2) oder von empfangbarer Strahlung für das Umfeld-Detektionselement (2) durchstrahlbar ist, und einem die Frontblende (4) rückseitig abschließenden Abdeckelement (5) besteht, wobei die Frontblende (4) und das Abdeckelement (5) zusammen einen Raum (6) einschließen,
**dadurch gekennzeichnet, dass**
ein Teil des Umfeld-Detektionselements (2) in dem Raum (6) aufgenommen ist, wobei das Umfeld-Detektionselement (2) durch eine Öffnung (7) in dem Abdeckelement (5) in den Raum (6) hineinragt und, wobei zwischen dem Öffnungsrand (8) und dem Umfeld-Detektionselement (2) wenigstens ein flexibles Dichtungselement (9) vorgesehen ist, wobei die Öffnung (7), das Umfeld-Detektionselement (2) und das Dichtungselement (9) so ausgebildet sind, dass die Dekorblende (3) in Relation zu dem Umfeld-Detektionselement (2) in der Öffnung (7) in unterschiedlichen Raumrichtungen, bevorzugt in allen Raumrichtungen, verlagerbar ist und der Raum (6) gleichzeitig vor dem Eindringen von Feststoffen oder Fluiden geschützt ist.

2. Außenverkleidungsteilanordnung nach Anspruch 1, **dadurch gekennzeichnet, dass** das Dichtungselement (9) als Faltenbalgdichtung oder als Hohlkammerprofil ausgebildet ist.

3. Außenverkleidungsteilanordnung nach Anspruch 1 oder 2, **dadurch gekennzeichnet, dass** die Frontblende (4) schalenförmig ausgebildet ist.

4. Außenverkleidungsteilanordnung nach einem der vorstehenden Ansprüche, **dadurch gekennzeichnet, dass** die Frontblende (4) und das Abdeckelement (5) stoffschlüssig miteinander verbunden sind.

5. Außenverkleidungsteilanordnung nach einem der vorstehenden Ansprüche 1 bis 3, **dadurch gekennzeichnet, dass** die Frontblende (4) und das Abdeckelement (5) lösbar miteinander verbunden sind.

6. Außenverkleidungsteilanordnung nach Anspruch 5, **dadurch gekennzeichnet, dass** zwischen den Randbereichen der Frontblende (4) und des Abdeckelements (5) eine Dichtung (10) oder ein Dichtmittel vorgesehen ist.

7. Außenverkleidungsteilanordnung nach einem der vorstehenden Ansprüche, **dadurch gekennzeichnet, dass** das Abdeckelement (5) aus einem Polymermaterial besteht, insbesondere aus einem faserverstärkten oder partikelverstärkten Polymermaterial.

8. Außenverkleidungsteilanordnung nach einem der vorstehenden Ansprüche, **dadurch gekennzeichnet, dass** das Umfeld-Detektionselement (2) ein Lidarsystem oder ein Radarsystem oder ein Kamerasystem umfasst.

9. Außenverkleidungsteilanordnung nach einem der vorstehenden Ansprüche, **dadurch gekennzeichnet, dass** die Dekorblende (3) eine synthetische Membran (11) aufweist, die einen Fluidaustausch zwischen dem Raum (6) und der die Dekorblende (3) umgebenden Atmosphäre ermöglicht.

10. Kraftfahrzeug mit einer Außenverkleidungsteilanordnung nach einem der vorstehenden Ansprüche.
